# EUROPÄISCHE PATENTSCHRIFT

(11) **EP 4 078 444 B1**
(45) Veröffentlichungstag und Bekanntmachung des Hinweises auf die Patenterteilung: **07.10.2026**
(21) Anmeldenummer: 20819709.5
(22) Anmeldetag: 03.12.2020
(51) Int. Cl.: G06V 10/774, F24C 7/08, G06V 20/68

(54) **ERZEUGEN VON TRAININGSDATEN ZUR ERKENNUNG EINER SPEISE**
GENERATION OF TRAINING DATA FOR THE IDENTIFICATION OF A DISH
GÉNÉRATION DE DONNÉES D'APPRENTISSAGE POUR L'IDENTIFICATION D'UN PLAT

(30) Priorität: 19.12.2019 DE 102019220237
(43) Veröffentlichungstag der Anmeldung: 26.10.2022
(73) Patentinhaber: BSH Hausgeräte GmbH, 81739 München (DE)
(72) Erfinder: HOLFELDER, Thomas, 71229 Leonberg (DE); RICHTER, Hoang, 83339 Chieming (DE); SÖLLNER, Christoph, 81475 München (DE)
(86) Internationale Anmeldenummer: PCT/EP2020/084397
(87) Internationale Veröffentlichungsnummer: WO 2021/122022

(56) Entgegenhaltungen:
- EP-A1- 3 292 738
- US-A1- 2019 110 638
- FARINELLA GIOVANNI MARIA ET AL: "Classifying food images represented as Bag of Textons", 2014 IEEE INTERNATIONAL CONFERENCE ON IMAGE PROCESSING (ICIP), IEEE, 27 October 2014 (2014-10-27), pages 5212 - 5216, XP032967576, DOI: 10.1109/ICIP.2014.7026055

## Beschreibung

Die Erfindung betrifft das Erzeugen von Trainingsdaten. Insbesondere betrifft die Erfindung das Erzeugen von Trainingsdaten zur Erkennung einer Speise.

Zur erfolgreichen Zubereitung einer Speise kann es hilfreich sein, die Speise während oder nach dem Garen optisch zu analysieren. Ein erfahrener Koch kann dies selbst tun; ein weniger erfahrener Koch oder ein Heimanwender kann auf externe Hilfe angewiesen sein. Ein automatisches System zur optischen Analyse einer Speise kann die Speise optisch erkennen und mit einer Referenz vergleichen. Sowohl zum Erkennen als auch zum Vergleichen muss das System zuvor mit einer großen Anzahl von Trainingsdaten trainiert werden.

Das Bereitstellen von Trainingsdaten kann aufwendig sein. Für eine Vielzahl Bilder von Speisen müssen jeweils Objektgrenzen der auf dem Bild dargestellten Speise gefunden und dem Bild zugeordnet werden. Diese Tätigkeit erfordert üblicherweise einen manuellen Eingriff oder eine manuelle Überwachung.

In FARINELLA GIOVANNI MARIA ET AL: "Classifying food images represented as Bag of Textrons", 2014 IEEE INTERNATIONAL CONFERENCE ON IMAGE PROCESSING (ICIP), IEEE, 27. Oktober 2014 (2014-10-27), Seiten 5212-5216, XP032967576, DOI: 10.1109/ICIP.2014.7026055 ist beschrieben, zur Kompensation einer Beleuchtung eine Bildnormalisierung durchzuführen.

EP 3 292 738 B1 beschreibt ein Verfahren nach dem Oberbegriff des Anspruchs 1.

US 2019/110638 A1 beschreibt ein Kochgerät mit einer Kamera, die Bilder des Garguts im Garraum aufnimmt. Mittels eines maschinellen Lernmodells werden Attribute des Garguts automatisch erkannt und basierend darauf der Garprozess gesteuert.

Eine der vorliegenden Erfindung zu Grunde liegende Aufgabe besteht in der Angabe einer verbesserten Technik zur automatischen Erzeugung von Trainingsdaten, die zum Trainieren eines Systems verwendet werden können, das dazu dient, eine Speise nicht nur zu erkennen, sondern auch betreffend eines Garfortschritts zu bewerten. Die Erfindung löst diese Aufgabe mittels der Gegenstände der unabhängigen Ansprüche. Unteransprüche geben bevorzugte Ausführungsformen wieder.

Ein erstes Ausführungsbeispiel der vorliegenden Erfindung umfasst ein Verfahren nach Anspruch 1.

Die Trainingsdaten können insbesondere dazu verwendet werden, ein neuronales Netz zu trainieren, das Speisen erkennen soll. Hierfür werden die Trainingsdaten vorzugsweise auf einem Server oder in einer Cloud gespeichert und beispielsweise mit Trainingsdaten von weiteren Gargeräten kombiniert, um einen umfassenden Bestand von Trainingsdaten zu generieren.

Erfindungsgemäß wurde erkannt, dass eine Speise in einem Gargerät üblicherweise mit wenig Variation an immer der gleichen Stelle angeordnet wird. Es kann daher einfach sein, Bilder der Speise anzufertigen, wobei die Bilder aus gleichen oder zumindest ähnlichen Perspektiven aufgenommen sind. Derartige Aufnahmen können eine große Anzahl Gemeinsamkeiten aufweisen, die zur Bestimmung der Objektgrenzen berücksichtigt werden können. Trainingsdaten für ein System zur Erkennung der Speise können daher mit verringertem oder ohne manuellen Aufwand bereitgestellt werden. Das System kann verbessert darauf trainiert werden, die Speise, beispielsweise auf einem Bild, korrekt zu erkennen und gegebenenfalls zu bewerten.

Das Gargerät kann insbesondere einen Ofen, einen Dampfgarer oder ein ähnliches Gerät umfassen, das insbesondere als Hausgerät oder Haushaltsgerät ausgebildet sein kann. Insbesondere wenn das Hausgerät vernetzt ist, können das Erfassen und das Verarbeiten des Bildes lokal oder seitens einer dedizierten entfernten Stelle durchgeführt werden. So kann leicht eine Vielzahl Hausgeräte zur Bereitstellung von Trainingsdaten genutzt werden.

In einer Ausführungsform wird eine Ausstattung eines Innenraums des Gargeräts bestimmt, wobei die Objektgrenzen auf der Basis der bestimmten Ausstattung bestimmt werden. Insbesondere können ein Typ oder eine Bauart des Gargeräts bestimmt werden. Die Innenausstattung kann beispielsweise eine Größe, eine geometrische Form, ein optisch erkennbares Element im Innenraum oder eine andere geometrische Gegebenheit betreffen. Beispielsweise kann auch angegeben sein, in welchen unterschiedlichen Höhen die Speise im Innenraum angeordnet werden kann. Ferner können von einem Element im Innenraum eine Farbe, eine Struktur oder eine Geometrie bekannt sein. Diese Elemente können auf dem Bild zur optischen Orientierung dienen. Die Objektgrenzen können erleichtert derart bestimmt werden, dass sie kein Element umfassen, das dem Innenraum zugeordnet ist.

Die Ausstattung kann auch ein Zubehör zur Verwendung im Gargerät umfassen. Dabei kann das Zubehör auf dem erfassten Bild erkannt werden. Das Zubehör kann beispielsweise ein Blech, eine Universalpfanne, einen Rost, eine Reine, eine Pfanne, einen Spieß oder ein Garthermometer umfassen. Die Objektgrenzen können erleichtert derart bestimmt werden, dass sie ein erkanntes Zubehör nicht umfassen.

In noch einer weiteren Ausführungsform wird eine während des Erfassens des Bildes aktive Beleuchtung der Speise bestimmt. Das Bild kann dann bezüglich der bestimmten Beleuchtung in seinen Farben normalisiert werden. Beispielsweise kann eine im Innenraum des Gargeräts angebrachte Beleuchtung bestimmt werden. Die Beleuchtung kann insbesondere bezüglich einer Bauart oder eines Modells des Gargeräts bestimmt werden. Eigenschaften der Beleuchtung, insbesondere ein Ort oder eine Abstrahleigenschaft einer Lichtquelle sowie ein verwendetes Farbenspektrum, können zur Farbnormalisierung verwendet werden. Dadurch kann eine Vergleichbarkeit der auf dem Bild abgebildeten Speise zwischen unterschiedlichen Gargeräten verbessert sein. Die Farbnormalisierung kann insbesondere bezüglich eines vorbestimmten Beleuchtungs- oder Farbprofils erfolgen.

In einer ersten Variante umfasst das Gargerät eine fest eingebaute Kamera. Das Einhalten einer vorbestimmten Perspektive kann dadurch leicht durchgesetzt werden. In einer zweiten Variante umfasst das Gargerät eine transparente Scheibe, wobei das Erfassen mittels einer Kamera erfolgt, die auf einer Außenseite der Scheibe angebracht ist. Die Scheibe kann insbesondere in einer Gerätetür des Gargeräts eingelassen sein. Derartige Scheiben finden sich häufig an Gargeräten wie einem Backofen, einem Dampfgarer oder einem Mikrowellenofen. Dadurch kann es erleichtert sein, eine beliebige vorhandene Kamera zur Erfassung der Speise zu nutzen. Gleichzeitig kann durch die begrenzte Fläche der Scheibe sichergestellt sein, dass eine vorbestimmte Perspektive ausreichend genau eingehalten ist.

Das Erfassen kann mittels einer Kamera erfolgen, wobei ein Erfassungsparameter der Kamera bestimmt werden kann. Der Erfassungsparameter kann insbesondere eine Brennweite, eine Auflösung, ein Farbprofil, eine Position oder eine Ausrichtung umfassen. Beispielsweise kann die Kamera von einem mobilen Gerät wie einem Tablet Computer oder einem Smartphone umfasst sein. In diesem Fall kann insbesondere eine Ausrichtung des Geräts bezüglich des Gargeräts leicht bestimmt werden, etwa auf der Basis eines eingebauten Beschleunigungssensors. Das erfasste Bild kann bezüglich eines Erfassungsparameters normalisiert werden. Beispielsweise kann eine Verzerrung, die insbesondere von einer verwendeten Optik herrühren kann, am Bild berücksichtigt oder aktiv kompensiert werden. Ein Erfassungsparameter der Kamera kann auch dem Bild zugeordnet werden. Der Erfassungsparameter kann eine Vergleichbarkeit zwischen den erfassten Bildern verbessern. Weitere mögliche Erfassungsparameter umfassen beispielsweise eine Belichtungszeit, eine Brennweite, eine Blende oder eine aktivierte Hilfsbeleuchtung (Lampe oder Blitz).

Die Kamera kann dazu eingerichtet sein, Tiefeninformationen zu erfassen. Dabei können die Objektgrenzen der Speise auf der Basis der Tiefeninformationen bestimmt werden. Insbesondere kann auf der Basis der Tiefeninformationen bestimmt werden, welche Bestandteile des Bildes nicht der Speise, sondern dem Gargerät oder einem Zubehör zuzuordnen ist.

Erfindungsgemäß werden zusätzlich weitere Informationen dem Bild zugeordnet, die im Rahmen der Erstellung erfasst werden können. Beispielsweise kann ein Garparameter des Gargeräts bestimmt werden, wobei der Garparameter dem Bild zugeordnet werden kann. Der Garparameter kann beispielsweise ein automatisches Programm umfassen, welches das Gargerät ausführt. Weitere mögliche Garparameter können eine Höhe der Speise im Innenraum, eine gewählte Temperatur, eine bereits erfolgte Gardauer oder einen Betriebsmodus des Gargeräts umfassen. Der Betriebsmodus kann beispielsweise angeben, in welcher Weise Wärme erzeugt wird, die auf die Speise einwirkt. So können beispielsweise Oberhitze, Unterhitze, Umluft und Grill unterschieden werden. In einer Verfeinerung dieser Ausführungsform kann auch ein zeitlicher Verlauf eines Garparameters bestimmt und dem Bild zugeordnet werden. Erfindungsgemäß wird ein zeitlicher Verlauf des Garparameters dem Bild zugeordnet, der sich in die Vergangenheit und auch in die Zukunft erstreckt.

In einer besonders vorteilhaften Ausführungsform des Verfahrens wird die innerhalb der Objektgrenzen gezeigte Speise mithilfe eines neuronalen Netzes erkannt, um Daten bezüglich einer erkannten Speise bereitzustellen. In Frage kommt bspw. ein tiefes convolutional neural network. Zumeist ergibt sich hier eine Wahrscheinlichkeitsverteilung mit mehr als einem Kandidaten für die Speise. In diesem Zusammenhang kann es vorteilhaft sein, ein Rezept zu bestimmen, das sich ein Nutzer des Gargeräts vor Kurzem angesehen hat, da eine nicht zu vernachlässigende Wahrscheinlichkeit besteht, dass der Gegenstand des Rezepts und die zu erkennende Speise miteinander korrelieren. Durch eine Kombination des Gegenstands des Rezepts mit den ermittelten Kandidaten für die Speise kann eine Erkennungsgenauigkeit erhöht werden. Darüber hinaus könne auf diese Weise automatisiert gelabelte Trainingsdaten für das neuronale Netz generiert werden. Denn der Name der Speise kann dem Rezept entnommen werden, so dass der Name nicht manuell eingegeben werden muss.

In einer Ausführungsform wird entsprechend ein Abrufen eines Rezepts im Bereich des Gargeräts oder durch einen registrierten Nutzer des Gargeräts maximal eine vorbestimmte Zeitspanne vor dem Erfassen des Bildes der Speise bestimmt. Das Rezept kann von einem lokalen Speicher oder von einem entfernten Gerät abgerufen werden. So kann darauf geschlossen werden, dass die Speise, deren Bild erfasst wurde, auf dem Rezept basiert. Ein Hinweis auf das Rezept oder ein Detail des Rezepts können dem Bild zugeordnet werden. Das Detail kann insbesondere die Art oder eine Bezeichnung der Speise umfassen. Auch eine Menge der Speise, eine Zutat oder eine zu erzielende Eigenschaft können dem Bild zugeordnet werden. Die bereitgestellten Trainingsdaten können auf diese Weise mit wertvollen Metadaten angereichert werden, die ihre Nützlichkeit bei dem Trainieren eines Systems zum Erkennen und/oder Bewerten einer Speise hilfreich sein können.

In einigen Ausführungsformen erfolgt eine Überprüfung der erkannten Speise mit Hilfe des abgerufenen Rezepts, um so die Wahrscheinlichkeit einer korrekten Erkennung zu erhöhen. Die erkannte Speise kann dann beispielsweise den Trainingsdaten als Label zugeordnet werden. Auf diese Weise können mit sehr geringem Aufwand zusätzliche gelabelte Trainingsdaten für das neuronale Netz erstellt werden, ohne dass ein manuelles Labeln erforderlich wäre. Dadurch kann möglicherweise die Erkennungsgenauigkeit des neuronalen Netzes kontinuierlich erhöht werden. Besondere Vorteile ergeben sich, wenn sich das neuronale Netzwerk auf einem Server bzw. in einer Cloud im Internet befindet und durch Trainingsdaten von vielen Nutzern an unterschiedlichen Orten kontinuierlich noch gründlicher trainiert wird.

In noch einer weiteren Ausführungsform können Trainingsdaten auf der Basis einer zeitlichen Abfolge von Bildern der Speise in dem Gargerät bereitgestellt werden. Insbesondere können Bilder in vorbestimmten relativen Zeitabständen angefertigt werden. Bilder der Speise während eines durchgeführten Garvorgangs können zum Trainieren eines Systems verwendet werden, das den Garfortschritt einer Speise berücksichtigt.

Ein zweites Ausführungsbeispiel der vorliegenden Erfindung umfasst ein System entsprechend Anspruch 14.

Das System kann leicht gebildet werden aus einem Haushaltsgerät wie einem Backofen und einem Universalgerät mit Kamera, insbesondere einem Smartphone. Zur Anbringung des Smartphones an dem Gargerät, so dass die Speise aus der vorbestimmten Perspektive erfasst werden kann, kann eine entsprechende Vorrichtung bereitgestellt sein. Eine solche Vorrichtung ist beispielsweise aus der deutschen Patentanmeldung DE 10 2019 211 576 bekannt.

Die Verarbeitungseinrichtung kann dazu eingerichtet sein, ein hierin beschriebenes Verfahren ganz oder teilweise auszuführen. Dazu kann die Verarbeitungseinrichtung einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung bzw. das System übertragen werden oder umgekehrt.

Die Verarbeitungseinrichtung kann im Bereich des Gargeräts oder an einer anderen Stelle vorgesehen sein, bspw. auf einem Server bzw. in einer Cloud im Internet. In einer Ausführungsform ist die Verarbeitungseinrichtung dazu eingerichtet, Trainingsdaten auf der Basis von Bildern einander entsprechender Speisen in einer Vielzahl Gargeräte bereitzustellen. Dazu kann die Verarbeitungseinrichtung insbesondere über ein Kommunikationsnetzwerk von der Kamera aus erreichbar sein. Die Verarbeitungseinrichtung kann als Server oder als Dienst, insbesondere in einer Cloud, bereitgestellt sein.

Die Erfindung wird nun unter Bezug auf die beiliegenden Figuren genauer beschrieben, in denen:
- Figur 1: ein System; und
- Figur 2: ein Ablaufdiagramm eines Verfahrens
darstellt.

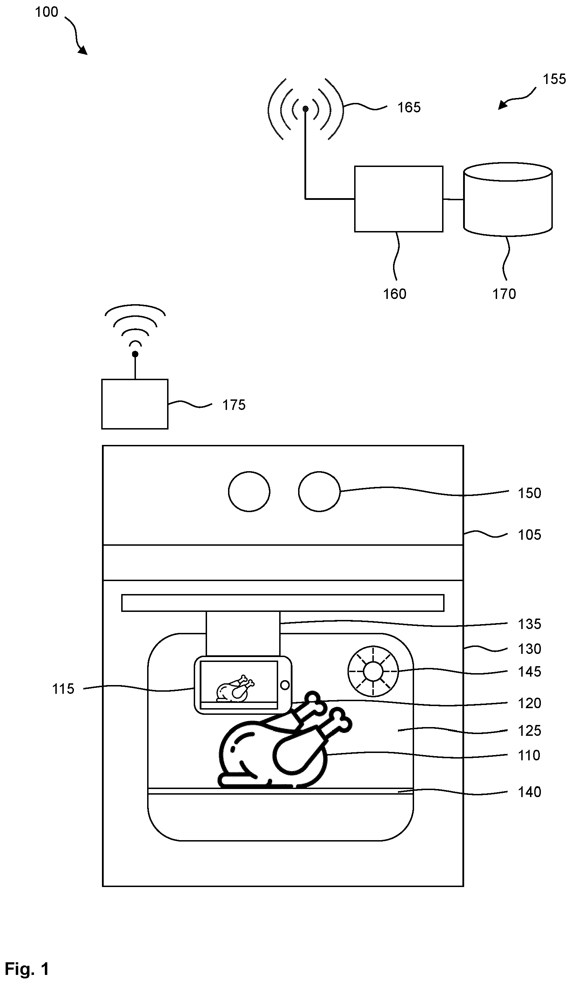

Figur 1 zeigt ein System 100. In einem Hausgerät 105, das vorliegend beispielhaft als Backofen ausgebildet ist, ist eine Speise 110 angeordnet. Die Speise 110 kann im Hausgerät 105 mittels einer Kamera 115 erfasst werden, die vorliegend beispielhaft von einem Smartphone 120 umfasst ist. In einer anderen Ausführungsform kann die Kamera 115 auch Teil des Hausgeräts 105 und insbesondere im Innenraum des Hausgeräts 105 angebracht sein.

In der dargestellten Ausführungsform umfasst das Hausgerät 105 eine Scheibe 125, auf deren Außenseite die Kamera 115 angebracht ist. Die Scheibe 125 kann sich insbesondere in einer Gerätetür 130 des Hausgeräts 105 befinden. Eine Halteeinrichtung 135 zur Aufnahme der Kamera 115 beziehungsweise des Smartphones 120 ist bevorzugt derart am Hausgerät 105 angebracht, dass die Kamera 115 eine vorbestimmte Perspektive zur Speise 110 einnimmt. Dazu kann beispielsweise eine Markierung am Hausgerät 105 angebracht sein, die ein korrektes Positionieren der Kamera 115 erleichtern kann. Die Halteeinrichtung 135 kann auch so ausgebildet sein, dass die Kamera 115 zwangsweise in eine vorbestimmte Position gebracht ist, sodass die vorbestimmte Perspektive nicht verfehlt werden kann. Die Halteeinrichtung 135 kann ein separates Element umfassen oder vom Hausgerät 105 umfasst sein.

Im Innenraum des Hausgeräts 105 befindet sich üblicherweise ein Träger 140, der in unterschiedliche, vorbestimmte Höhen verstellt werden kann. Auf dem Träger 140 kann die Speise 110 direkt oder mittels eines Zubehörteils wie einem Spieß, einer Reine, einem Blech, einem Rost oder einer Pfanne angebracht sein. Im Innenraum kann außerdem eine Lichtquelle 145 vorgesehen sein, die insbesondere eine Glühlampe oder eine Halogenlampe umfassen kann. Das Hausgerät 105 ist üblicherweise dazu eingerichtet, die Speise 110 zu garen, indem ihr auf eine vorbestimmte Weise Wärme zugeführt wird. Die Wärme kann insbesondere mittels Konvektion, als Wärmestrahlung, mittels Wasserdampfs oder elektromagnetischer Wellen an die Speise 110 übermittelt werden. Das Hausgerät 105 kann zur Bereitstellung einer oder mehrerer unterschiedlicher Formen von Wärme eingerichtet sein. Eine Art und/oder Leistung der Wärme kann mittels eines Bedienelements 150 eingestellt werden. Optional kann auch ein Garprogramm ausgewählt werden, das eine vorbestimmte zeitliche Abfolge von Wärmearten und/oder Wärmeleistungen umfassen kann.

Das Hausgerät 105 und/oder die Kamera 115 beziehungsweise das Smartphone 120 können mit einer zentralen Stelle 155 kommunikativ vernetzt sein. Die zentrale Stelle 155 ist üblicherweise vom Hausgerät 105 entfernt angebracht. Bevorzugt befindet sich die zentrale Stelle 155 außerhalb eines Haushalts, in dem das Hausgerät 105 aufgestellt ist, und kann im Allgemeinen auch ortsabstrahiert als Dienst beispielsweise in einer Cloud realisiert sein. Die zentrale Stelle 155 umfasst üblicherweise eine Verarbeitungseinrichtung 160, die mit einer insbesondere drahtlosen Kommunikationseinrichtung 165, sowie optional einem Datenspeicher 170 verbunden ist.

Im Bereich des Hausgeräts 105, insbesondere in einem Haushalt, in dem das Hausgerät 105 angeordnet ist, kann ferner ein weiteres Gerät 175 vorgesehen sein, das bevorzugt dazu eingerichtet ist, mit der zentralen Stelle 155 zu kommunizieren. In einer ersten Variante ist das Gerät 175 dazu eingerichtet, mit einem Benutzer zu interagieren und in Abhängigkeit der Interaktion das Hausgerät 105 zu steuern. Beispielsweise kann das Gerät 175 einen Sprachassistenten umfassen, der einen natürlichsprachigen Befehl eines Benutzers verstehen und in eine Steueranweisung für das Hausgerät 105 umsetzen kann. In einer zweiten Variante ist das Gerät 175 dazu eingerichtet, einem Benutzer Informationen bereitzustellen, die er zur Zubereitung der Speise 110, insbesondere mittels des Hausgeräts 105, benötigt. Das Gerät 175 kann etwa zur Darstellung eines Kochrezepts eingerichtet sein. Das Kochrezept kann lokal abgespeichert sein oder von einer externen Stelle, beispielsweise der zentralen Stelle 155, bezogen werden. Optional ist eine interaktive Benutzerführung durch Verarbeitungsschritte des Rezepts vorgesehen.

Die beiden Varianten können auch miteinander kombiniert ausgebildet sein, indem das Gerät 175 sowohl eine Benutzerschnittstelle zur Steuerung des Hausgeräts 105, als auch eine Benutzerschnittstelle zum Führen eines Benutzers durch ein Kochrezept umfasst.

Es wird vorgeschlagen, mittels der Kamera 115 ein Bild der Speise 110 im Hausgerät 105 zu erfassen und automatisch Objektgrenzen der Speise 110 zu bestimmen. Außerdem können Informationen, die mit der abgebildeten Speise 110 oder dem Prozess der Erstellung des Bildes in Verbindung stehen, dem Bild zugeordnet werden. Das Bild und die anderen Informationen können dann zusammen als Trainingsdaten verwendet werden, um ein nicht dargestelltes Verarbeitungssystem zum Erkennen der Speise 110 zu trainieren. Dabei können die Trainingsdaten automatisch derart bereitgestellt werden, dass sie keiner menschlichen Kontrolle mehr unterzogen werden müssen. Durch Bereitstellen einer möglichst großen Vielzahl qualitativ hochwertiger Trainingsinformationen, insbesondere auf der Basis einer Vielzahl in unterschiedlichen Haushalten angeordneter Hausgeräte 105, kann ein Erkennungssystem trainiert werden, das eine Speise 110 nicht nur erkennen, sondern auch beurteilen kann. Die Beurteilung kann insbesondere einen Garfortschritt der Speise 110 betreffen. Ein Garprozess einer Speise 110 in einem Hausgerät 105 kann dann verbessert gesteuert werden.

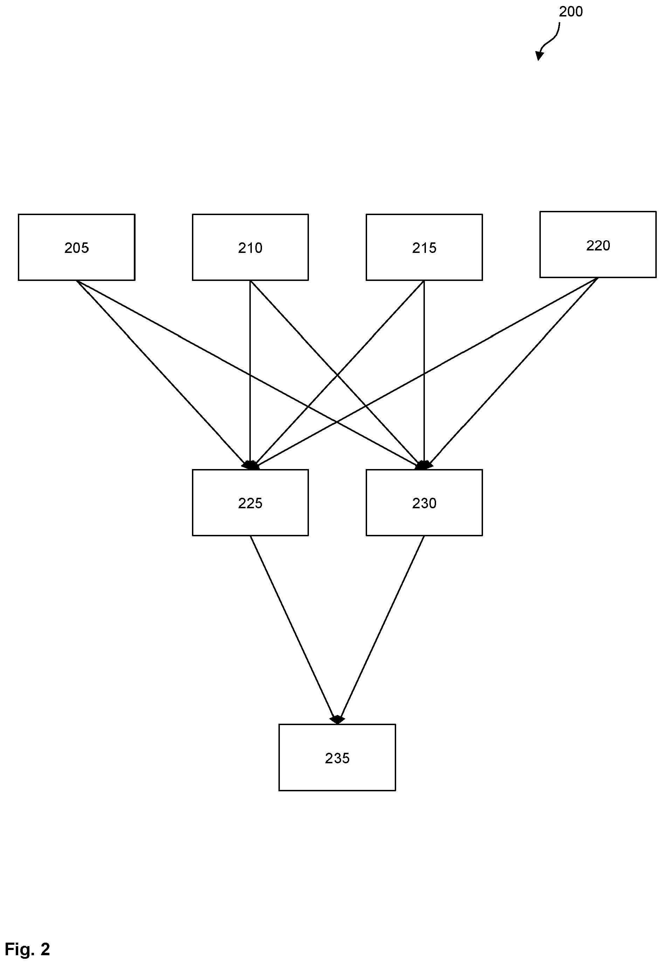

Figur 2 zeigt ein Ablaufdiagramm eines Verfahrens 200. Das Verfahren 200 kann insbesondere in Verbindung mit dem System 100 von Figur 1 durchgeführt werden. Es ist zu beachten, dass zentrale Verarbeitungsschritte von einer Verarbeitungseinrichtung 160 ausgeführt werden können, die lokal beispielsweise in Form des Smartphones 120, oder entfernt, beispielsweise in Form der zentralen Stelle 155, bereitgestellt sein kann.

In einem Schritt 205 wird mittels der Kamera 115 ein Bild der Speise 110 erfasst. Dabei befindet sich die Kamera 115 in einer vorbestimmten Position, sodass ihre Perspektive auf die Speise 110 vorbestimmt beziehungsweise bekannt ist.

In einem Schritt 210 kann optional ein Geräteparameter des Hausgeräts 105 bestimmt werden. Der Geräteparameter kann insbesondere eine Behandlung der Speise 110 durch das Hausgerät 105 betreffen. Beispielsweise kann der Geräteparameter eine Temperatur, eine Wärmequelle, eine Wärmeart und/oder eine Wärmeleistung betreffen. Wird das Hausgerät 105 nach einem vorbestimmten zeitlichen oder programmatischen Ablauf gesteuert, so kann dieser Ablauf oder ein Hinweis auf den Ablauf bestimmt werden. Dabei kann ein bereits abgearbeiteter Teil des Ablaufs oder ein noch ausstehender, geplanter Teil bestimmt werden. Zur Bestimmung kann ein Parameter des Hausgeräts 105 abgefragt werden. Alternativ kann das Gerät 175 abgefragt werden, falls eine Steuerung des Hausgeräts 105 über das Gerät 175 erfolgt.

Ferner können beispielsweise eine Ausführungsform oder ein Typ des Hausgeräts 105 bestimmt werden. Auf dieser Basis kann beispielsweise bestimmt werden, wie ein Innenraum des Hausgeräts 105 beschaffen ist. Die Beschaffenheit kann beispielsweise eine Struktur, eine Oberfläche, eine Farbe, ein Zubehörteil oder eine geometrische Größe umfassen. Auch ein mechanischer Einstellungsparameter kann bestimmt werden, beispielsweise auf welche Höhe der Träger 140 eingestellt ist, um die Speise 110 im Innenraum des Hausgeräts 105 zu halten. Weiter kann beispielsweise bestimmt werden, welche Lichtverhältnisse im Innenraum des Hausgeräts 105 herrschen. Dazu können beispielsweise eine Position, eine Abstrahlcharakteristik, ein abgestrahltes Spektrum und/oder eine bereitgestellte Lichtintensität bestimmt werden.

In einem optionalen Schritt 215 kann die Speise 110 bestimmt werden. Dazu kann insbesondere geprüft werden, welche Hinweise zur Zubereitung der Speise 110 vor dem Zeitpunkt der Erfassung des Bildes im Bereich des Hausgeräts 105 zu verzeichnen waren. Ein solcher Hinweis kann beispielsweise im Abrufen eines Kochrezepts bestehen. Ein anderer Hinweis kann in der Wahl eines Behandlungsprogramms des Hausgeräts 105 bestehen. Optional kann auch der Inhalt des bereitgestellten Bildes zur Bestimmung der Speise 110 verwendet werden. Weitere Bestimmungsarten, beispielsweise auf der Basis einer expliziten Benutzereingabe oder mittels eines dedizierten Sensors, sind ebenfalls möglich.

In einem ebenfalls optionalen Schritt 220 können einer oder mehrere Erfassungsparameter bestimmt werden, die der Erfassung des Bildes im Schritt 205 zu Grunde liegen. Erfassungsparameter können beispielsweise die Kamera 115 betreffen und etwa eine Brennweite, eine Blende, eine Belichtungszeit oder eine Empfindlichkeit umfassen. Weitere Erfassungsparameter können eine Position und/oder Ausrichtung der Kamera 115 betreffen. Die Ausrichtung des Smartphones 120 kann beispielsweise mittels eines eingebauten Beschleunigungssensors bezüglich der Erdgravitation bestimmt werden. Ferner können Beleuchtungsverhältnisse während des Erfassens des Bildes bestimmt werden. Die Beleuchtungsverhältnisse können sensorisch mittels der Kamera 115 bestimmt werden, oder eine Charakteristik der Lichtquelle 145 kann berücksichtigt werden. Umfasst die Kamera 115 eine eigene Lichtquelle 145, beispielsweise eine Lampe oder ein Blitzlichtgerät, so können auch deren Beleuchtungsparameter berücksichtigt werden. Außerdem können ein Datum oder eine Uhrzeit des Bereitstellens der Aufnahme bestimmt werden.

Auf der Basis der in den Schritten 205 bis 220 bestimmten Informationen werden in einem Schritt 225 Objektgrenzen der Speise 110 auf dem Bild bestimmt. Dazu kann beispielsweise das erfasste Bild bezüglich eines im Schritt 220 bestimmten Erfassungsparameters entzerrt und farblich kalibriert werden. Eine Helligkeit und/oder ein Kontrast können angepasst werden. Die Perspektive der Kamera 115 bezüglich des Hausgeräts 105 oder der Speise 110 kann bestimmt werden. Elemente des Hausgeräts 105 oder Zubehörteile, die auf dem erstellten Bild zu sehen sind, können erkannt werden. Die Objektgrenzen der Speise 110 können dann so bestimmt werden, dass möglichst alle Elemente, die auf dem Bild zu sehen sind, aber der Speise 110 nicht zuzurechnen sind, von den Objektgrenzen nicht umfasst sind.

In einem Schritt 230 können Informationen bestimmt werden, welche die Speise 110 direkt betreffen. Dazu können beispielsweise eine Bezeichnung der Speise 110, eine Zubereitungsart, ein Hinweis auf ein verwendetes Kochrezept, ein Aufnahmezeitpunkt in Bezug auf eine vorbestimmte Gardauer oder einen vorbestimmten Garprozess oder ein Hinweis auf das Hausgerät 105, einen umfassenden Haushalt oder eine das Hausgerät 105 oder das Gerät 175 bedienende Person bestimmt werden. Generell kann jede Art von Parameter bestimmt werden, die auf der Basis der in den Schritten 205 bis 220 generierten Informationen bestimmbar ist und zur Interpretation der auf dem Bild dargestellten Speise 110 beitragen kann.

In einem Schritt 235 werden die Objektgrenzen dem Bild zugeordnet. Optional werden Meta-Informationen, die im Schritt 230 über die Speise 110 bestimmt wurden, ebenfalls dem Bild zugeordnet. Das Bild mit den zugeordneten Informationen kann Teil von Trainingsdaten sein, beispielsweise um ein System 100 zur Erkennung oder Bewertung einer Speise 110 zu trainieren. Das System 100 kann insbesondere zum unbeaufsichtigten Lernen eingerichtet sein und beispielsweise ein neuronales Netzwerk umfassen.

### Bezugszeichen

- 100: System
- 105: Hausgerät
- 110: Speise
- 115: Kamera
- 120: Smartphone
- 125: Scheibe
- 130: Gerätetür
- 135: Halteeinrichtung
- 140: Träger
- 145: Lichtquelle
- 150: Bedienelement
- 155: zentrale Stelle
- 160: Verarbeitungseinrichtung
- 165: Kommunikationseinrichtung
- 170: Speichereinrichtung
- 175: Gerät

- 200: Verfahren
- 205: Erfassen Bild
- 210: Bestimmen Geräteparameter
- 215: Bestimmen Speise
- 220: Bestimmen Erfassungsparameter
- 225: Bestimmen Objektgrenzen Speise
- 230: Bestimmen Meta-Informationen Speise
- 235: Bereitstellen Trainingsdaten

## Patentansprüche

1. Verfahren (200) zum Bereitstellen von Trainingsdaten für ein neuronales Netz zur Erkennung einer Speise (110),
wobei das Verfahren (200) folgende Schritte umfasst:
- Erfassen (205) eines Bilds der Speise (110), während die Speise (110) in einem Gargerät (105) angeordnet ist; wobei das Bild aus einer vorbestimmten Perspektive erfasst wird;
- Automatisches Bestimmen (225) von Objektgrenzen der Speise (110) auf dem Bild; und
- Zuordnen (235) der Objektgrenzen zu dem Bild der Speise (110),
- wobei außerdem Informationen, die mit der abgebildeten Speise (110) in Verbindung stehen, dem Bild der Speise (110) zugeordnet (235) werden,
**dadurch gekennzeichnet dass**
- das Bild der Speise (110), die dem Bild der Speise (110) zugeordneten Objektgrenzen und die zugeordneten Informationen zusammen als Trainingsdaten verwendet werden, um ein Verarbeitungssystem, nämlich ein Erkennungssystem, das die Speise (110) erkennt und auch betreffend eines Garfortschritts beurteilt, zu trainieren, und
- die zugeordneten Informationen einen zeitlichen Verlauf eines Garparameters umfassen, der sich in die Vergangenheit und auch in die Zukunft erstreckt.

2. Verfahren (200) nach Anspruch 1, wobei eine Ausstattung eines Innenraums des Gargeräts (105) bestimmt wird; und die Objektgrenzen auf der Basis der bestimmten Ausstattung bestimmt (225) werden.

3. Verfahren (200) nach Anspruch 2, wobei die Ausstattung ein Zubehör zur Verwendung im Gargerät (105) umfasst; und wobei das Zubehör auf dem erfassten Bild erkannt (225) wird.

4. Verfahren (200) nach einem der vorangehenden Ansprüche, wobei eine während des Erfassens (205) des Bildes aktive Beleuchtung der Speise (110) bestimmt (220) wird; und wobei das Bild bezüglich der bestimmten Beleuchtung in seinen Farben normalisiert (225) wird.

5. Verfahren (200) nach einem der vorangehenden Ansprüche, wobei das Gargerät (105) eine transparente Scheibe (125) umfasst; und wobei das Erfassen mittels einer Kamera (115) erfolgt, die auf einer Außenseite der Scheibe (125) angebracht ist.

6. Verfahren (200) nach einem der vorangehenden Ansprüche, wobei das Erfassen mittels einer Kamera (115) erfolgt; und wobei ein oder mehrere Erfassungsparameter der Kamera (115) bestimmt (220) werden.

7. Verfahren (200) nach einem der vorangehenden Ansprüche, wobei die Kamera (115) dazu eingerichtet ist, Tiefeninformationen zu erfassen; wobei die Objektgrenzen der Speise (110) auf der Basis der Tiefeninformationen bestimmt (225) werden.

8. Verfahren (200) nach einem der vorangehenden Ansprüche, wobei der zeitliche Verlauf des Garparameters vor dem Bestimmen (225) der Objektgrenzen bestimmt (210) wird.

9. Verfahren (200) nach einem der Ansprüche 6 bis 8, wobei der oder die Erfassungsparameter vor dem Bestimmen (225) der Objektgrenzen bestimmt (220) werden und beim Zuordnen (235) der Objektgrenzen zu dem Bild ebenfalls dem Bild zugeordnet (235) werden.

10. Verfahren (200) nach einem der vorangehenden Ansprüche, mit den zusätzlichen Schritten
- Erkennen der innerhalb der Objektgrenzen gezeigten Speise mithilfe eines neuronalen Netzes, um Daten bezüglich einer erkannten Speise bereitzustellen, und
- Zuordnen eines Labels zu den Trainingsdaten, der die erkannte Speise bezeichnet.

11. Verfahren (200) nach einem der vorangehenden Ansprüche, wobei ein Abrufen (215) eines Rezepts im Bereich des Gargeräts (105) oder durch einen registrierten Nutzer des Gargeräts (105) maximal eine vorbestimmte Zeitspanne vor dem Erfassen des Bildes der Speise (110) bestimmt wird.

12. Verfahren (200) nach Anspruch 10 und 11, mit dem zusätzlichen Schritt Überprüfen der erkannten Speise mit Hilfe des abgerufenen Rezepts.

13. Verfahren (200) nach einem der vorangehenden Ansprüche, wobei Trainingsdaten auf der Basis einer zeitlichen Abfolge von Bildern der Speise (110) in dem Gargerät (105) bereitgestellt werden.

14. System (100) zur Bereitstellung von Trainingsdaten für ein neuronales Netz zur Erkennung und Beurteilung einer Speise (110) mittels eines Verfahrens nach einem der vorangehenden Ansprüche,
wobei das System (100) folgendes umfasst:
- eine Kamera (115) zur Erfassung eines Bilds der Speise (110), während die Speise (110) in einem Gargerät (105) angeordnet ist; wobei die Kamera (115) dazu eingerichtet ist, die Speise (110) aus einer vorbestimmten Perspektive zu erfassen;
- eine Verarbeitungseinrichtung (160) zur Bestimmung von Objektgrenzen der Speise (110) auf dem Bild, und zur Bereitstellung von Trainingsdaten, die das Bild und die bestimmten Objektgrenzen umfassen.

15. System (100) nach Anspruch 14, weiterhin umfassend
- ein trainierbares Verarbeitungssystem, nämlich ein Erkennungssystem, das die Speise (110) erkennt und auch betreffend eines Garfortschritts beurteilt.

## Claims

1. Method (200) for providing training data for a neural network for the identification of a food (110),
wherein the method (200) comprises the following steps:
- capturing (205) an image of the food (110), while the food (110) is arranged in a cooking appliance (105); wherein the image is captured from a predetermined perspective;
- automatically determining (225) object borders of the food (110) on the image; and
- assigning (235) the object borders to the image of the food (110),
- wherein moreover information which is connected to the imaged food (110) is assigned (235) to the image of the food (110),
**characterised in that**
the image of the food (110), the object borders assigned to the image of the food (110) and the assigned information are used together as training data in order to train a processing system, namely an identification system which identifies the food (110) and also assesses a relevant cooking progress, and the assigned information comprises a temporal course of a cooking parameter which extends into the past and also into the future.

2. Method (200) according to claim 1, wherein a layout of an interior space of the cooking appliance (105) is determined; and the object borders are determined (225) on the basis of the determined layout.

3. Method (200) according to claim 2, wherein the layout comprises an accessory for use in the cooking appliance (105); and wherein the accessory is identified (225) on the captured image.

4. Method (200) according to one of the preceding claims, wherein a lighting of the food (110) which is active during the capture (205) of the image is determined (220); and wherein the image is standardised (225) in terms of its colours with respect to the determined lighting.

5. Method (200) according to one of the preceding claims, wherein the cooking appliance (105) comprises a transparent disc (125); and wherein the capture is carried out by means of a camera (115) which is attached to an exterior face of the disc (125).

6. Method (200) according to one of the preceding claims, wherein the capture is carried out by means of a camera (115); and wherein one or more capture parameters of the camera (115) are determined (220).

7. Method (200) according to one of the preceding claims, wherein the camera (115) is designed to capture depth information; wherein the object borders of the food (110) are determined (225) on the basis of the depth information.

8. Method (200) according to one of the preceding claims, wherein the temporal course of the cooking parameter is determined before determining (225) the object borders.

9. Method (200) according to one of claims 6 to 8, wherein the capture parameter or parameters is/are determined (220) before determining (225) the object borders (2) and, when the object borders are assigned (235) to the image, are likewise assigned (235) to the image.

10. Method (200) according to one of the preceding claims, with the additional steps
- identifying the food shown within the object borders with the aid of a neural network, in order to provide data with respect to an identified food, and
- assigning a label to the training data, which refers to the identified food.

11. Method (200) according to one of the preceding claims, wherein a call-up of (215) of a recipe in the region of the cooking appliance (105) or by a registered user of the cooking appliance (105) is determined at most a predetermined period of time before capturing the image of the food (110).

12. Method (200) according to claim 10 or 11, with the additional step of checking the identified food with the aid of the called-up recipe.

13. Method (200) according to one of the preceding claims, wherein training data is provided on the basis of a temporal sequence of images of the food (110) in the cooking appliance (105).

14. System (100) for providing training data for a neural network for the identification and assessment of a food (110) by means of a method according to one of the preceding claims, wherein the system (100) comprises the following:
- a camera (115) for capturing an image of the food (110), while the food (110) is arranged in a cooking appliance (105); wherein the camera (115) is designed to capture the food (110) from a predetermined perspective;
- a processing facility (160) for determining object borders of the food (110) on the image and for providing training data, which comprises the image and the determined object borders.

15. System (100) according to claim 14, further comprising
- a trainable processing system, namely an identification system, which identifies the food (110) and also assesses a relevant cooking progress.

## Revendications

1. Procédé (200) pour fournir des données d'apprentissage destinées à un réseau neuronal pour identifier un plat (110),
dans lequel le procédé (200) comprend les étapes suivantes :
- acquisition (205) d'une image du plat (110) tandis que le plat (110) est disposé dans un appareil de cuisson (105), l'image étant acquise à partir d'une perspective prédéfinie,
- détermination automatique (225) de contours d'objet correspondant au plat (110) dans l'image, et
- association (235) des contours d'objet à l'image du plat (110),
- dans lequel en outre des informations relatives au plat représenté (110) sont associées (235) à l'image du plat (110),
**caractérisé en ce que**
l'image du plat (110), les contours d'objet associés à l'image du plat (110) et les informations associées sont utilisées conjointement en tant que données d'apprentissage, afin d'entraîner un système de traitement, à savoir un système d'identification qui identifie le plat (110) et évalue également l'avancement de sa cuisson, et
les informations associées comprennent une évolution dans le temps d'un paramètre de cuisson s'étendant à la fois dans le passé et dans le futur.

2. Procédé (200) selon la revendication 1, dans lequel un équipement d'un espace intérieur de l'appareil de cuisson (105) est déterminé et les contours d'objet sont définis (225) sur la base de l'équipement déterminé.

3. Procédé (200) selon la revendication 2, dans lequel l'équipement comprend un accessoire destiné à être utilisé dans l'appareil de cuisson (105), l'accessoire étant identifié (225) sur l'image acquise.

4. Procédé (200) selon l'une des revendications précédentes, dans lequel un éclairage actif appliqué au plat (110) est déterminé (220) durant l'acquisition (205) de l'image, et dans lequel l'image est normalisée (225) dans ses couleurs en fonction de l'éclairage déterminé.

5. Procédé (200) selon l'une des revendications précédentes, dans lequel l'appareil de cuisson (105) comprend une vitre transparente (125), et dans lequel l'acquisition s'effectue au moyen d'une caméra (115) qui est disposée sur un côté extérieur de la vitre (125).

6. Procédé (200) selon l'une des revendications précédentes, dans lequel l'acquisition s'effectue au moyen d'une caméra (115) et dans lequel un ou plusieurs paramètres d'acquisition de la caméra (115) sont déterminés (220).

7. Procédé (200) selon l'une des revendications précédentes, dans lequel la caméra (115) est configurée pour acquérir des informations de profondeur, les contours d'objet du plat (110) étant déterminés (225) sur la base des informations de profondeur.

8. Procédé (200) selon l'une des revendications précédentes, dans lequel l'évolution dans le temps du paramètre de cuisson est déterminée (210) avant la détermination (225) des contours d'objet.

9. Procédé (200) selon l'une des revendications 6 à 8, dans lequel le ou les paramètres d'acquisition sont déterminés (220) avant la détermination (225) des contours d'objet et sont associés également à l'image lors de l'affectation (235) des contours d'objet à l'image.

10. Procédé (200) selon l'une des revendications précédentes, comprenant les étapes supplémentaires suivantes :
- identification du plat représenté à l'intérieur des contours d'objet à l'aide d'un réseau neuronal, afin de produire des données concernant un plat identifié, et
- affectation d'un label aux données d'apprentissage, qui désigne le plat identifié.

11. Procédé (200) selon l'une des revendications précédentes, dans lequel il est défini qu'une consultation (215) d'une recette au niveau de l'appareil de cuisson (105) ou par un utilisateur enregistré de l'appareil de cuisson (105) est effectuée au maximum un intervalle de temps prédéterminé avant l'acquisition de l'image du plat (110).

12. Procédé (200) selon la revendication 10 et 11, comprenant en outre une étape de vérification du plat identifié à l'aide de la recette consultée.

13. Procédé (200) selon l'une des revendications précédentes, dans lequel des données d'apprentissage sont fournies sur la base d'une succession chronologique d'images du plat (110) dans l'appareil de cuisson (105).

14. Système (100) pour fournir des données d'apprentissage pour un réseau neuronal afin d'identifier et évaluer un plat (110) au moyen d'un procédé selon l'une des revendications précédentes,
dans lequel le système (100) comprend les suivants :
- une caméra (115) destinée à acquérir une image du plat (110) tandis que le plat (110) est disposé dans un appareil de cuisson (105), la caméra (115) étant configurée pour acquérir l'image du plat selon une perspective prédéfinie,
- un dispositif de traitement (160) destiné à déterminer des contours d'objet du plat (110) sur l'image, et à fournir des données d'apprentissage, qui comprennent l'image et les contours d'objet ainsi déterminés.

15. Système (100) selon la revendication 14, comprenant en outre :
- un système de traitement apte à être entraîné, à savoir un système d'identification, qui identifie le plat et évalue également l'état d'avancement de sa cuisson.
